# EUROPÄISCHE PATENTSCHRIFT

(11) **EP 4 048 565 B1**
(45) Veröffentlichungstag und Bekanntmachung des Hinweises auf die Patenterteilung: **24.07.2024**
(21) Anmeldenummer: 20796521.1
(22) Anmeldetag: 19.10.2020
(51) Int. Cl.: B60T 17/22, B60T 13/74, B60T 8/92, B60T 8/32, B60T 8/88

(54) **BREMSSYSTEM FÜR EIN KRAFTFAHRZEUG**
BRAKING SYSTEM FOR A MOTOR VEHICLE
SYSTÈME DE FREINAGE POUR UN VÉHICULE À MOTEUR

(30) Priorität: 22.10.2019 DE 102019216234
(43) Veröffentlichungstag der Anmeldung: 31.08.2022
(73) Patentinhaber: Continental Automotive Technologies GmbH, 30175 Hannover (DE)
(72) Erfinder: BRENN, Martin, 60488 Frankfurt am Main (DE); BÖHM, Jürgen, 60488 Frankfurt am Main (DE); GRÖGER, Sascha, 60488 Frankfurt am Main (DE); MÜLLER, Sebastian, 60488 Frankfurt am Main (DE); BEUSS, Jochen, 60488 Frankfurt am Main (DE); KEIL, Anselm, 60488 Frankfurt am Main (DE); BESIER, Marco, 60488 Frankfurt am Main (DE); MUNTU, Matthias, 60488 Frankfurt am Main (DE); SAUERWALD, Timo, 60488 Frankfurt am Main (DE)
(74) Vertreter: Continental Corporation
(86) Internationale Anmeldenummer: PCT/EP2020/079331
(87) Internationale Veröffentlichungsnummer: WO 2021/078673

(56) Entgegenhaltungen:
- WO-A1-99/26822
- DE-A1- 10 043 189
- DE-A1- 102007 001 371
- DE-A1- 102007 040 829
- DE-B4- 10 043 189

## Beschreibung

Die Erfindung betrifft ein Bremssystem für ein Kraftfahrzeug.

Das Dokument DE 100 43 189 A1 beschreibt ein Steuersystem für ein Kraftfahrzeug mit einer Steuervorrichtung zur elektrischen Steuerung einer Aktuatorvorrichtung einer Radbremse. Ferner beschreibt das Dokument DE 10 2007 040 829 A1 eine Vorrichtung für eine Bremse, welche kabelgebunden ausgeführt ist. Auch das Dokument WO 99/26822 beschreibt ein elektromechanisches Bremssystem für Kraftfahrzeuge. Schließlich beschreibt das Dokument DE 10 2007 001 371 A1 ein Bremssystem mit einer elektromechanischen Bremse mit einer Bremssteuereinrichtung zum Ansteuern eines Bremsaktuators.

Bei elektromechanischen Bremsen ist ein mechanischer Durchgriff eines Bremspedals auf die Radbremsen zur Erzeugung eines Bremsmoments auch bei einem Ausfall einer elektrisch gesteuerten Bremskraftverstärkung und/oder Verteilung nicht mehr vorgesehen. Vielmehr findet eine mechanische Entkopplung des mechanischen Durchgriffs von einem Bremspedal zu den Radbremsen statt.

Folglich ist eine direkte Nutzung der Fahrer-Muskelkraft zur Erzeugung eines Bremsmoments, wie sie in einer Rückfallebenenbetriebsart eines elektrohydraulischen Bremssystems vorgesehen ist, nicht mehr möglich. Dementsprechend ist eine Regelung des aufgebrachten Bremsmoments in einer Rückfallebene, also beispielsweise bei einem Ausfall der zentralen elektrischen Steuerung der Radbremsen, nicht mehr möglich.

Demgegenüber liegt der vorliegenden Erfindung die Aufgabe zugrunde, ein Bremssystem zu schaffen, das die vorstehenden Nachteile des Standes der Technik überwindet.

In einem ersten Aspekt betrifft die Erfindung ein Bremssystem für ein Kraftfahrzeug mit elektromechanischen Radbremsen, einer Bremsbetätigungseinheit und einer zentralen Bremsensteuereinheit, wobei die Radbremsen jeweils eine lokale Bremsensteuereinheit aufweisen, und wobei die zentrale Bremsensteuereinheit mit der Bremsbetätigungseinheit und den lokalen Bremsensteuereinheiten der Radbremsen über eine erste Datenverbindung direkt verbunden ist. Die Bremsbetätigungseinheit ist mit der lokalen Bremsensteuereinheit wenigstens einer Radbremse über eine zweite Datenverbindung direkt verbunden, wobei die zentrale Bremsensteuereinheit in einer Normalbetriebsart des Bremssystems dazu ausgebildet ist, aus einer insbesondere über die erste Datenverbindung erhaltenen ersten Betätigungsinformation der Bremsbetätigungseinheit wenigstens eine Bremsanforderung zu ermitteln und der Bremsanforderung entsprechende Steuersignale an die lokalen Bremsensteuereinheiten der Radbremsen zu übermitteln. Die lokalen Bremsensteuereinheiten der Radbremsen sind in einer Rückfallebenenbetriebsart des Bremssystems dazu ausgebildet, die jeweiligen Radbremsen auf Grundlage einer über die zweite Datenverbindung erhaltenen zweiten Betätigungsinformation der Bremsbetätigungseinheit anzusteuern.

Unter einer "direkten" Verbindung ist dabei eine Verbindung zwischen zwei Elementen zu verstehen, bei der zwischen den Elementen keine weiteren Elemente in der Verbindung angeordnet sind. Beispielsweise ist demnach vorgesehen, dass die zentrale Bremsensteuereinheit als zentraler Punkt einer sternförmigen Verbindung vorgesehen ist, sodass die zentrale Bremsensteuereinheit direkt, also unmittelbar, mit der Bremsbetätigungseinheit, den lokalen Bremsensteuereinheiten und/oder weiteren Elementen des Bremssystems verbunden ist. Die einzelnen Verbindungen dieser sternförmigen Verbindung bilden dann die erste Datenverbindung aus. Eine "Datenverbindung" kann demnach im Kontext dieser Erfindung auch eine Mehrzahl von Einzelverbindungen umfassen, die insgesamt eine Datenverbindung zwischen einer Mehrzahl von Elementen des Bremssystems herstellen.

Der Erfindung liegt der Gedanke zugrunde, dass in technischen Systemen Fehler auftreten könnten und ein Verlust des Bremsvermögens zu Gefahrensituationen führen würde. Daher sind die Elemente des Bremssystems vorzugsweise redundant auszulegen. So kann in einer Rückfallebenenbetriebsart des Bremssystems, beispielsweise bei einem Ausfall der zentralen Bremsensteuereinheit, nach wie vor eine durch die Bremsbetätigungseinrichtung erfasste Betätigungsinformation durch die Radbremsen umgesetzt werden.

Diese Redundanz wird dabei bevorzugt mit maximaler Unabhängigkeit durchgeführt. Die Redundanz ist dabei so gewählt, dass die Zahl der duplizierten Elemente und Datenverbindungen minimal ist, sodass die von der redundanten Auslegung verursachten Mehrkosten bei der Herstellung des Bremssystems minimal sind.

Dabei kann vorgesehen sein, dass die zentrale Bremsensteuereinheit jeweils mit den lokalen Bremsensteuereinheiten der Radbremsen einer Fahrzeugachse über eine gemeinsame Datenverbindung verbunden ist

Die erste Betätigungsinformation enthält dabei nach einer Ausgestaltung einen Betätigungsgrad der Bremsbetätigungseinheit, insbesondere einen Betätigungswinkel, einen Betätigungsweg oder eine Betätigungskraft, oder aber die Bremsanforderung an sich. Eine direkte Übermittlung der Bremsanforderung als Betätigungsinformation kann beispielsweise für automatisierte Fahrfunktionen vorgesehen sein, da hier keine mechanischen Daten eines Bremspedals notwendig sind, sondern vielmehr von einer Fahrfunktion Informationen über eine aufzubringende Verzögerung bereitgestellt werden können. Die Bezeichnung als "Betätigungsinformation" bezieht sich demnach nicht ausschließlich auf die Betätigung eines Bremspedals, sondern vielmehr auf eine Betätigung der Bremse an sich.

Hierzu analog ist nach einer weiteren Ausgestaltung vorgesehen, dass die zweite Betätigungsinformation dabei nach einer Ausgestaltung einen Betätigungsgrad der Bremsbetätigungseinheit, insbesondere einen Betätigungswinkel, einen Betätigungsweg oder eine Betätigungskraft, oder aber die Bremsanforderung an sich enthält.

Erfindungsgemäß ist vorgesehen, dass die Bremsbetätigungseinheit mit der lokalen Bremsensteuereinheit genau einer Radbremse direkt verbunden ist, wobei die mit der Bremsbetätigungseinheit direkt verbundene lokale Bremsensteuereinheit dazu ausgebildet ist, von der Bremsbetätigungseinheit empfangene zweite Betätigungsinformationen über eine dritte Datenverbindung an die lokalen Bremsensteuereinheiten der weiteren Radbremsen zu übermitteln. Dabei sind bevorzugt die lokalen Bremsensteuereinheiten der weiteren Radbremsen jeweils mit höchstens zwei weiteren lokalen Bremsensteuereinheiten der Radbremsen über die dritte Datenverbindung verbunden. Dabei kann insbesondere vorgesehen sein, dass die dritte Datenverbindung ausschließlich die lokalen Bremsensteuereinheiten der Radbremsen miteinander verbindet. Dabei kann die dritte Datenverbindung insbesondere eine Ringstruktur ausbilden, die die lokalen Bremsensteuereinheiten miteinander vernetzt.

Nach einer bevorzugten Ausgestaltung ist dabei vorgesehen, dass die lokalen Bremsensteuereinheiten der Radbremsen dazu ausgebildet sind, über die dritte Datenverbindung die zweite Betätigungsinformation und/oder ermittelte Raddrehzahlinformationen untereinander auszutauschen.

Dabei ist nach einer weiteren Ausgestaltung vorgesehen, dass die elektromechanischen Radbremsen jeweils einen elektromechanischen Aktor aufweisen, wobei die lokalen Bremsensteuereinheiten dazu ausgebildet sind, den jeweiligen elektromechanischen Aktor zur Erzeugung eines Bremsmoments anzusteuern.

Nach einer weiteren Ausgestaltung ist ferner vorgesehen, dass die lokalen Bremsensteuereinheiten der Radbremsen jeweils mit Raddrehzahlsensoren der den Radbremsen zugeordneten Rädern zur Übertragung von Informationen verbunden sind. Dabei kann ferner vorgesehen sein, dass die lokalen Bremsensteuereinheiten dazu ausgebildet sind, Raddrehzahlinformationen der jeweiligen Raddrehzahlsensoren über die erste Datenverbindung an die zentrale Bremsensteuereinheit zu übermitteln.

Die zentrale Bremsensteuereinheit ist dann in einer Normalbetriebsart bevorzugt dazu ausgebildet, die Steuersignale für die lokalen Bremsensteuereinheiten der Radbremsen auf Grundlage der Raddrehzahlinformationen der Räder und der ersten Betätigungsinformation der Bremsbetätigungseinheit zu ermitteln. So kann beispielsweise zentral eine Anti-Blockier-Regelung für die Radbremsen implementiert werden. Ferner kann vorgesehen sein, dass die lokalen Bremsensteuereinheiten dazu ausgebildet sind, auf Grundlage von von den Raddrehzahlsensoren empfangenen Raddrehzahlinformationen eine Bremsenregelfunktion, insbesondere eine Anti-Blockier-Regelung durchzuführen.

Ferner ist nach einer weiteren Ausgestaltung vorgesehen, dass die lokalen Bremsensteuereinheiten dazu ausgebildet sind, über die zweite oder die dritte Datenverbindung empfangene Informationen zu ignorieren, bis ein Ausfall der zentralen Bremsensteuereinheit erkannt wurde, sodass fehlerhafte Ansteuerungen vermieden werden.

Nach einer weiteren bevorzugten Ausgestaltung ist ferner vorgesehen, dass die erste Betätigungsinformation unabhängig von der zweiten Betätigungsinformation ermittelt wird. Dies kann insbesondere dadurch erreicht werden, dass die erste Betätigungsinformation durch wenigstens eine erste Sensoranordnung der Bremsbetätigungseinheit ermittelt wird und die zweite Betätigungsinformation durch wenigstens eine zweite Sensoranordnung der Bremsbetätigungseinheit ermittelt wird. Dabei ist nach einer bevorzugten Ausgestaltung vorgesehen, dass die physikalische Größe, aus der die erste Sensoranordnung die erste Betätigungsinformation ermittelt, sich von der physikalischen Größe, aus der die zweite Sensoranordnung die zweite Betätigungsinformation ermittelt, unterscheidet. Auf diese Weise kann die Ausfallsicherheit des Bremssystems verbessert werden, da Betätigungsinformationen auf voneinander unabhängigen Wegen ermittelt werden, sodass ein Ausfall einer Detektionsart, beispielsweise durch einen Sensorfehler, nicht zwangsläufig zu einem Gesamtausfall der Erfassung der Betätigungsinformation führt.

Dabei ist nach einer weiteren bevorzugten Ausgestaltung vorgesehen, dass die Bremsbetätigungseinheit wenigstens zwei Signalausgänge aufweist, wobei ein erster Signalausgang mit der ersten Datenverbindung und ein zweiter Signalausgang mit der zweiten Datenverbindung verbunden ist. Dabei sind die Signalausgänge bevorzugt galvanisch voneinander getrennt, sodass ein Ausfall eines der Signalausgänge den anderen Signalausgang nicht beeinflusst. Auf diese Weise wird die Ausfallsicherheit des Bremssystems weiter verbessert.

Nach einer weiteren Ausgestaltung ist ferner vorgesehen, dass die zentrale Bremsensteuereinheit mit einem Fahrzeugbus verbunden ist, wobei von dem Fahrzeugbus empfangene Bremsanforderungen von der zentralen Bremsensteuereinheit bei der Ermittlung der Steuersignale für die lokalen Bremsensteuereinheiten berücksichtigt werden. Auf diese Weise können zusätzliche Informationen bei der Bestimmung des Steuersignals berücksichtigt werden.

Nach einer weiteren Ausgestaltung ist ferner vorgesehen, dass wenigstens eine lokale Bremsensteuereinheit direkt mit dem Fahrzeugbus verbunden ist. Dabei kann insbesondere vorgesehen sein, dass die lokalen Bremsensteuereinheiten der Radbremsen dazu ausgebildet sind, über die dritte Datenverbindung eine von dem Fahrzeugbus empfangene Bremsanforderung untereinander auszutauschen, sodass die Infos aus dem Fahrzeugbus über eine durch die dritte Datenverbindung gebildete Ringleitung weitergegeben werden.

Um die Ausfallsicherheit des Bremssystems weiter zu verbessern, ist nach einer weiteren Ausgestaltung ferner vorgesehen, dass das Bremssystem eine primäre Energieversorgung und eine von der primären Energieversorgung unabhängige sekundäre Energieversorgung aufweist. Dabei ist bevorzugt vorgesehen, dass die primäre Energieversorgung dazu ausgebildet ist, die erste Sensoranordnung der Bremsbetätigungseinheit, die zentrale Bremsensteuereinheit und eine erste Teilmenge der Radbremsen mit Energie zu versorgen, während die sekundäre Energieversorgung dazu ausgebildet ist, die zweite Sensoranordnung der Bremsbetätigungseinheit eine von der ersten Teilmenge verschiedene zweite Teilmenge der Radbremsen mit Energie zu versorgen. Die Energieversorgung der Radbremsen kann dabei entweder achsweise oder diagonal aufgeteilt sein, sodass es sich bei der ersten Teilmenge der Radbremsen um die Radbremsen einer ersten Fahrzeugachse und bei der zweiten Teilmenge der Radbremsen um die Radbremsen einer zweiten Fahrzeugachse handelt.

Nach einer weiteren Ausgestaltung ist ferner vorgesehen, dass wenigstens eine Teilmenge der Radbremsen, insbesondere die Radbremsen einer Hinterachse des Fahrzeugs, dazu ausgebildet ist, eine Parkbremsfunktion umzusetzen, wobei in der Rückfallebenenbetriebsart die lokalen Bremsensteuereinheiten dazu ausgebildet sind, eine Parkbremsfunktion zu aktivieren, wenn erkannt wurde, dass ein Fahrer das Kraftfahrzeug verlässt, eine Zündung des Kraftfahrzeugs deaktiviert und/oder eine zweite Parkbremsbetätigungseinrichtung aktiviert wurde. Dabei kann ferner vorgesehen sein, dass das Bremssystem wenigstens Parkbremsbetätigungseinrichtung aufweist, wobei die Parkbremsbetätigungseinrichtung mit der zentralen Bremsensteuereinheit verbunden ist und dazu ausgebildet ist, bei Betätigung der Parkbremsbetätigungseinrichtung eine Parkbremsinformation an die zentrale Bremsensteuereinheit zu übermitteln, wobei vorzugsweise die zentrale Bremsensteuereinheit dazu ausgebildet ist, die Radbremsen zur Aktivierung einer Parkbremsfunktion anzusteuern, wenn die Parkbremsinformation von der Parkbremsbetätigungseinrichtung empfangen wurde.

Nach einer weiteren Ausgestaltung ist ferner vorgesehen, dass die zentrale Bremsensteuereinheit in der Normalbetriebsart aus der ermittelten Bremsanforderung jeweils durch die Radbremsen aufzubringende Bremsmomente und/oder Spannkräfte ermittelt, wobei die an die lokalen Bremsensteuereinheiten übermittelten Steuersignale die ermittelten Bremsmomente und/oder Spannkräfte für die jeweils der lokalen Bremsensteuereinheit zugeordnete Radbremse enthalten. Unter einer "Spannkraft" ist dabei jene Kraft zu verstehen, mit der die Reibpartner einer Radbremse aufeinandergepresst werden. Ferner ist unter einem "Bremsmoment" ein durch die Radbremse auf ein Fahrzeugrad bewirktes Drehmoment zu verstehen, dass entgegen der Rotationsrichtung des Fahrzeugrades wirkt. In dieser Ausgestaltung erfolgt demnach die Verarbeitung einer Bremsanforderung bis zu dem Punkt, an dem die konkret durch die Radbremsen zu erzeugenden Kräfte ermittelt sind, vollständig durch die zentrale Bremsensteuereinheit. Dabei wird durch die zentrale Bremsensteuereinheit bevorzugt auch eine vorgesehene Verteilung der Bremskräfte zur Realisierung der Sollverzögerung zwischen den Radbremsen berücksichtigt. Unter einer "Bremskraft" ist dabei wiederum jene Kraft zu verstehen, die zwischen Fahrzeugrad und Fahrbahn wirkt und zu einer Verzögerung des Fahrzeugs führt.

Alternativ zu der zuvor beschriebenen vollständigen Verarbeitung einer Bremsanforderung durch die zentrale Bremsensteuereinheit ist nach einer weiteren Ausgestaltung vorgesehen, dass die zentrale Bremsensteuereinheit in der Normalbetriebsart aus der ermittelten Bremsanforderung eine durch die Radbremsen aufzubringende Sollverzögerung des Kraftfahrzeugs ermittelt, wobei die an die lokalen Bremsensteuereinheiten übermittelten Steuersignale die ermittelte Sollverzögerung des Kraftfahrzeugs enthalten. Die lokalen Bremsensteuereinheiten sind dann dazu ausgebildet, ein durch die jeweils zugeordnete Radbremse aufzubringendes Bremsmoment und/oder eine Spannkraft zur Umsetzung der Sollverzögerung des Kraftfahrzeugs zu ermitteln. Dabei wird durch die lokalen Bremsensteuereinheiten der Radbremsen jeweils bei der Bestimmung der aufzubringenden Bremsmomente und/oder Spannkräfte jeweils eine Bremskraftverteilungsfunktion zur Aufteilung der Bremskräfte zwischen den Radbremsen berücksichtigt. Demnach wird in dieser Ausführungsform durch die zentrale Bremsensteuereinheit nur eine Information über die Sollverzögerung des Fahrzeugs ermittelt, die dann durch die lokalen Bremsensteuereinheiten weiterverarbeitet werden muss.

Nach einer weiteren Ausgestaltung ist ferner vorgesehen, dass die lokalen Bremsensteuereinheiten in der Rückfallebenenbetriebsart dazu ausgebildet sind, aus der zweiten Betätigungsinformation ein durch die der jeweiligen lokalen Bremsensteuereinheit zugeordnete Radbremse aufzubringendes Bremsmoment und/oder eine durch die der jeweiligen lokalen Bremsensteuereinheit zugeordnete Radbremse aufzubringende Spannkraft zu ermitteln.

Dabei ist nach einer bevorzugten Ausgestaltung ferner vorgesehen, dass bei der Ermittlung des aufzubringenden Bremsmoments und/oder der aufzubringenden Spannkraft eine vordefinierte Verteilung einer zur Umsetzung einer Bremsanforderung benötigten Bremskraft zwischen den Radbremsen berücksichtigt wird. Erneut ist dabei unter einer "Bremskraft" jene Kraft zu verstehen, die zwischen Fahrzeugrad und Fahrbahn wirkt und zu einer Verzögerung des Fahrzeugs führt. So kann beispielsweise vorgesehen sein, dass die Radbremsen einer Vorderachse des Fahrzeugs grundsätzlich eine höhere Bremskraft aufbringen sollen, als die Radbremsen einer Hinterachse des Fahrzeugs. Insbesondere kann beispielsweise die Verteilung dergestalt festgelegt sein, dass ein fester Anteil der zur Umsetzung der Bremsanforderung erforderlichen Bremskraft durch die Radbremsen der Hinterachse bzw. Vorderachse bereitgestellt wird. Beispielsweise kann vorgesehen sein, dass 20% der erforderlichen Bremskraft durch die Radbremsen der Hinterachse bereitgestellt werden, während die Radbremsen der Vorderachse die übrigen 80% der Bremskraft bereitstellen.

So kann auch bei einer fehlenden Koordinierung einer Verzögerung durch eine zentrale Bremsensteuereinheit eine effiziente Nutzung der möglichen Verzögerungsfähigkeit des Fahrzeugs gewährleistet werden, indem ein Überbremsen der Fahrzeugachsen vermieden wird. Dabei kann die Verteilung der Bremskraft von Fahrzeugparametern abhängen, wie beispielsweise einem Fahrzeuggewicht, dem Radstand des Fahrzeugs, einer Schwerpunktlage des Fahrzeugs, oder ähnlichem.

Ferner kann auch vorgesehen sein, dass die Verteilung der Bremskräfte von der Geschwindigkeit des Fahrzeugs, einem Lenkwinkel und der Intensität einer Bremsanforderung abhängen. So ist beispielsweise bei einer starken Verzögerung bei Kurvenfahrt bei hohen Geschwindigkeiten ein Überbremsen der Hinterachse dringend zu vermeiden, da dies zu einem Ausbrechen des Fahrzeughecks führen könnte.

Besonders bevorzugt ist ferner die Verteilung der aufzubringenden Bremsmomente zwischen den Radbremsen abhängig von der Stärke der Bremsanforderung. So ist mit zunehmender Stärke der Bremsanforderung eine Verschiebung der Bremsleistung zur Vorderachse des Fahrzeugs aufgrund der dynamischen Radlastverteilung bei der Fahrzeugverzögerung sinnvoll.

Die Fahrstabilität des Fahrzeugs bei einer Verzögerung wird nach einer weiteren Ausgestaltung dadurch verbessert, dass bei einem erkannten Ausfall wenigstens einer der lokalen Bremsensteuereinheiten ein Anstieg der Sollverzögerung des Kraftfahrzeugs und/oder ein Anstieg der durch die Radbremsen aufgebrachten Bremsmomente und/oder Spannkräfte auf einen bestimmten Gradienten begrenzt wird. Dabei kann die Begrenzung des Anstiegs sowohl durch die lokalen Bremsensteuereinheiten der Radbremsen als auch durch die zentrale Bremsensteuereinheit kontrolliert werden. Durch einen auf einen definierten Gradienten begrenzten Anstieg der Bremsmomente der Radbremsen kann vermieden werden, dass aufgrund einer asymmetrisch im Fahrzeug wirkenden Verzögerung ein Giermoment des Fahrzeugs erzeugt wird, das durch den Fahrzeugführer nicht mehr kontrolliert werden kann.

Dabei ist nach einer bevorzugten Ausgestaltung ferner vorgesehen, dass der Gradient von der Position der der ausgefallenen lokalen Bremsensteuereinheit zugeordneten Radbremse an dem Kraftfahrzeug abhängig ist. So ist beispielsweise bei einem Ausfall einer Radbremse an einem Vorderrad des Fahrzeugs ein im Vergleich zu einem Ausfall einer Radbremse an einem Hinterrad des Fahrzeugs geringerer Gradient notwendig, um das Giermoment des Fahrzeugs bei einer Verzögerung auf ein beherrschbares Maß zu senken. Hierzu kann insbesondere vorgesehen sein, dass eine Information über den Betriebsstatus der lokalen Bremsensteuereinheiten sowohl zwischen den lokalen Bremsensteuereinheiten über die dritte Datenverbindung als auch zwischen den lokalen Bremsensteuereinheiten und der zentralen Bremsensteuereinheit über die zweite Datenverbindung ausgetauscht wird. So kann sowohl in der Normalbetriebsart als auch der Rückfallebenenbetriebsart eine gezielte Einstellung des Gradienten bei Ausfall einer lokalen Bremsensteuereinheit einer Radbremse erfolgen.

Nach Ausgestaltungen der Erfindung wird die nachfolgend beschriebene Architektur umgesetzt. An jedem Rad bzw. in jeder Radbremse ist eine lokale Bremsensteuereinheit (WCU) und ein elektromechanischer Aktuator angeordnet, welche für die Erzeugung einer Radkraft bzw. eines Brems-/Radmoments zuständig ist. Diese lokalen Bremsensteuereinheiten sind sternförmig mit einer zentralen Bremsensteuereinheit verbunden, welche die Bremsanforderungen auf Grund eines Fahrzeug-Wunschs, Piloten (Parkpilot, Automatic Cruise Control, Automated Driving)-Wunschs oder eines Funktions-Wunsch (Active Yaw Control, Traction Control System) an die lokalen Bremsensteuereinheiten verteilt.

Die zentrale Bremsensteuereinheit liest den ersten Signalausgang einer Bremsbetätigungseinheit, also mithin die entsprechenden Sensoren eines elektronischen Bremspedals (ePedal) ein und ermittelt einen DBR-Wunsch. (Drive Brake Request, Fahrerbremswunsch). Diese Kommunikation erfolgt mit den rohen Sensorinformationen des dahinterliegenden Sensors und wird von der zentralen Bremsensteuereinheit aufbereitet, also in eine Bremsanforderung übersetzt.

Alternativ kann die Kommunikation zwischen Bremsbetätigungseinheit und zentraler Bremsensteuereinheit mit der seriellen Kommunikation (CAN, Flexray, Ethernet) des Fahrzeugnetzwerkes erfolgen. In diesem Fall ist der serielle Kommunikationskanal als Teil der ersten Datenverbindung zu verstehen.

Die zentrale Bremsensteuereinheit ist mit einem Fahrzeugbus verbunden und kann von diesem externe Anforderungen, insbesondere Bremsanforderungen, annehmen. Die Bremsbetätigungseinheit überträgt auf der Kommunikationsleitung, (erste Datenverbindung) den Weg, die Kraft oder direkt den Fahrerwunsch als Bremsmoment an die zentrale Bremsensteuereinheit.

Für eine Rückfallebene des Bremssystems ist vorgesehen, dass die lokalen Bremsensteuereinheiten der Radbremsen mit der Bremsbetätigungseinheit über eine gemeinsame Ring-Kommunikationsleitung, gebildet durch die zweite und dritte Datenverbindung in einem zweiten Kanal verbunden sind. Die Bremsbetätigungseinheit überträgt auf dieser Kommunikationsleitung den Weg, die Kraft oder direkt den Fahrerwunsch welcher von unabhängigen Sensoren in einem anderen Gehäuse oder ausreichend getrennt vom Hauptpfad, also jener Information, die an die zentrale Bremsensteuereinheit übermittelt wird, ermittelt wurde. Diese Kommunikation erfolgt vorzugsweise mit einer Bus-(Multipunkt)-Kommunikation (CAN, Flexray, Ethernet) des Fahrzeugnetzwerkes.

Die lokale Bremsensteuereinheiten ermitteln den Fahrerbremswunsch (Bremsanforderung) aus der Information bzgl. Weg oder Kraft des ePedals. Die lokalen Bremsensteuereinheiten erzeugen dezentral aus diesem Fahrerbremswunsch und optional mit der Hilfe der Verfügbarkeitsinformation der anderen lokalen Bremsensteuereinheiten das für diesen Fahrerbremswunsch zugeordnete Bremsmoment. Für Automatisiertes Fahren ist die Ringleitung vorzugsweise auch noch mit dem redundanten Piloten, bspw. vermittelt durch den Fahrzeugbus, verbunden, der Bremsanforderungen direkt übertragen kann.

Nach Ausgestaltungen der Erfindung kann dabei ferner vorgesehen sein, dass die lokalen Bremsensteuereinheit direkt eine Bremsenregelfunktion, bspw. ABS ausführen. Ferner kann vorgesehen sein, dass die lokalen Bremsensteuereinheiten direkt die Raddrehzahlinformationen der Raddrehzahlsensoren der Radbremsen direkt einlesen und zur Regelung des Bremsmoments verwenden.

Ferner kann vorgesehen sein, dass die Sternleitung (erste Datenverbindung) keine Verbindung von der zentralen Bremsensteuereinheit zu den lokalen Bremsensteuereinheiten, sondern eine Verbindung von der zentralen Bremsensteuereinheit zu allen lokalen Bremsensteuereinheiten einer Achse ist. Ferner kann die zentrale Bremsensteuereinheit in den allgemeinen Chassis-Controller integriert werden.

Die möglichen Verbindungen zwischen der zentralen Bremsensteuereinheit (Master) und den lokalen Bremsensteuereinheiten (WCU), sowie zu einem Fahrzeugbus (Vehicle) sind nachfolgend nochmals tabellarisch dargestellt:

### Sternleitung:

| | **Master** | **WCU FL** | **WCU FR** | **WCU RL** | **WCU RR** | **Vehicle** |
|---|---|---|---|---|---|---|
| **Kanal 1** | X | X | | | | |
| **Kanal 2** | X | | X | | | |
| **Kanal 3** | X | | | X | | |
| **Kanal 4** | X | | | | X | |
| **Kanal 5** | X | | | | | X |

### Modifiziert:

| | **Master** | **WCU FL** | **WCU FR** | **WCU RL** | **WCU RR** | **Vehicle** |
|---|---|---|---|---|---|---|
| **Kanal 1** | X | X | X | | | |
| **Kanal 3** | X | | | X | X | |
| **Kanal 5** | X | | | | | X |

Eine vorgesehene Verbindung eines Kanals der zentralen Bremsensteuereinheit mit einem weiteren Element ist dabei durch ein "X" markiert.

Bezüglich der Stromversorgung, also der Versorgung der Elemente des Bremssystems mit Energie ist nach einer Ausgestaltung der Erfindung vorgesehen, dass die zentrale Bremsensteuereinheit, ein Sensorpfad (erste Sensoranordnung) der Bremsbetätigungseinheit und zwei der Radbremsen (diagonal oder vorne oder hinten) bzw. deren lokale Bremsensteuereinheiten von einem primären Bordnetz (primäre Energieversorgung) versorgt werden. Die zwei der Radbremsen (diagonal oder vorne oder hinten), bzw. deren lokale Bremsensteuereinheiten, und der zweite Sensorpfad (zweite Sensoranordnung) der Bremsbetätigungseinheit werden vom sekundären Bordnetz (sekundäre Energieversorgung) versorgt.

Bezüglich der Ansteuerung der Radbremsen zur Umsetzung einer Parkbremsfunktion ist nach einer weiteren Ausgestaltung vorgesehen, dass der EPB Schalter (Parkbremsbetätigungseinrichtung) selbst mit der zentralen Bremsensteuereinheit verbunden ist. Die zentrale Bremsensteuereinheit ermittelt und verteilt die Ansteueranforderungen (Parkbremsinformatio) der Parkbremse an die lokalen Bremsensteuereinheiten, die dazu ausgebildet sind, eine Parkbremsfunktion umzusetzen.

In einer Rückfallebenenbetriebsart kann ferner vorgesehen sein, dass das Fahrzeugnetz über "Fahrer verlassen", "Ignition Off", einen zweiten Schalter, oder andere Eingabe-Möglichkeiten den Wunsch zur Betätigung der elektronischen Parkbremse und übermittelt diesen direkt auf die Ringleitung (zweite Datenverbindung)

Dabei kann vorgesehen sein, dass die lokalen Bremsensteuereinheiten eine Option enthalten, dass Informationen auf der Ringleitung (zweite

Datenverbindung) solange ignoriert werden, bis ein Ausfall der zentralen Bremsensteuereinheit bspw. über Timeout der Kommunikation oder explizitem Abmelden erkannt worden ist.

Im Folgenden werden bevorzugte Ausgestaltungen der Erfindung anhand der Figuren näher erläutert. Dabei zeigen:
- Figur 1: eine schematische Darstellung eines beispielhaften Bremssystems,
- Figur 2: eine beispielhafte Regleranordnung zur Bestimmung von Steuersignalen aus einer ersten Betätigungsinformation durch die zentrale Bremsensteuereinheit in einer Normalbetriebsart,
- Figur 3: eine beispielhafte Regleranordnung zur Bestimmung von Spannkräften aus einer zweiten Betätigungsinformation durch die lokalen Bremsensteuereinheiten in einer Rückfallebenenbetriebsart, und
- Figur 4: eine beispielhafte Regleranordnung zur Bestimmung von Steuersignalen oder Spannkräften aus einer Betätigungsinformation bei Ausfall einer lokalen Bremsensteuereinheit.

Im Folgenden werden einander ähnliche oder identische Merkmale mit denselben Bezugszeichen gekennzeichnet.

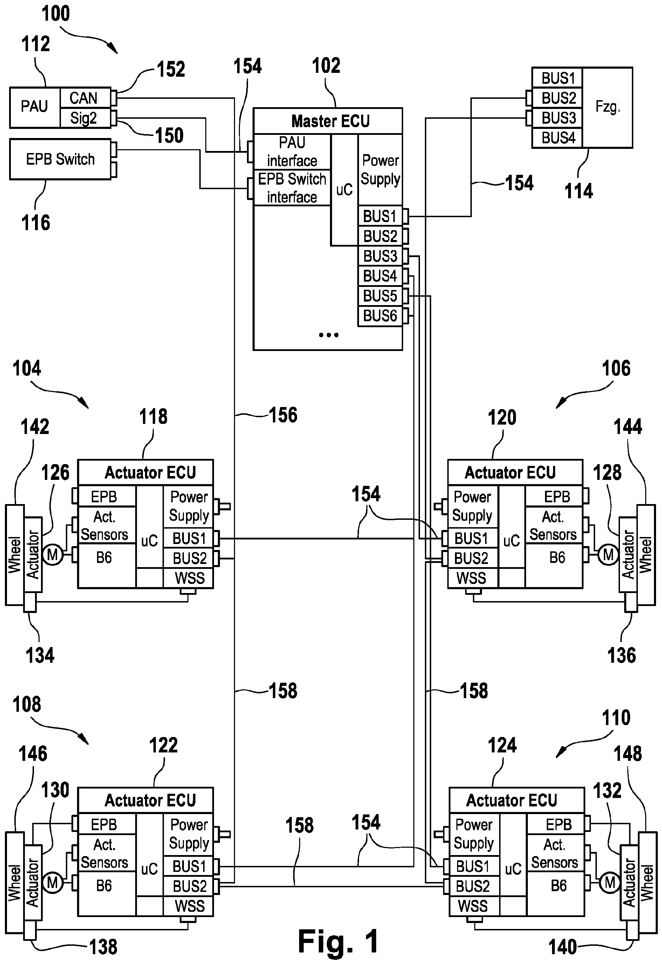

Die Figur 1 zeigt eine schematische Darstellung eines Bremssystems 100 nach einer Ausgestaltung der Erfindung. Dabei weist das Bremssystem 100 eine zentrale Bremsensteuereinheit 102, vier elektromechanische Radbremsen 104, 106, 108 und 110, eine Bremsbetätigungseinheit 112, einen Fahrzeugbus 114 und eine Parkbremsbetätigungseinrichtung 116 auf. Die Radbremsen weisen dabei jeweils eine lokale Bremsensteuereinheit 118, 120, 122, 124, einen Aktuator 126, 128, 130, 132 und einen Raddrehzahlsensor 134, 136, 138, 140 auf und sind den Fahrzeugrädern 142, 144, 146, 148 zugeordnet.

Die Bremsbetätigungseinheit 112 ist dabei bevorzugt als Bremspedal mit einem vollständig mechanischen Pedalgefühlsimulator (ePedal) ausgebildet.

Die Bremsbetätigungseinheit 112 weist zwei unabhängige Signalausgänge 150, 152 auf, wobei über die Signalausgänge 150, 152 bei einer Betätigung der Bremsbetätigungseinheit 112 durch einen Fahrzeugführer jeweils eine erste bzw. zweite Betätigungsinformation bereitgestellt wird. Dabei wird die erste Betätigungsinformation durch eine erste Sensoranordnung und die zweite Betätigungsinformation durch eine zweite Sensoranordnung ermittelt. Die erste und zweite Sensoranordnung sind dabei vorzugsweise voneinander unabhängig und ermitteln bevorzugt die Betätigungsinformation auf Grundlage unterschiedlicher physikalischer Größen.

Der erste Signalausgang 150 ist dabei über eine erste Datenverbindung 154 mit der zentralen Bremsensteuereinheit 102 verbunden. Ferner ist die zentrale Bremsensteuereinheit 102 über die erste Datenverbindung 154 direkt mit den lokalen Bremsensteuereinheiten 118, 120, 122, 124 der Radbremsen 104, 106, 108, 110, mit dem Fahrzeugbus 114 und mit der Parkbremsbetätigungseinrichtung 116 verbunden. Über den Fahrzeugbus können dabei beispielsweise Bremsanforderungen übermittelt werden, wenn sich das Fahrzeug in einem autonomen oder teilautonomen Fahrmodus befindet. Die erste Datenverbindung 154 bildet demnach eine sternförmige Verbindung aus, in deren Mittelpunkt die zentrale Bremsensteuereinheit 102 angeordnet ist.

Die zentrale Bremsensteuereinheit 102 ist dabei dazu ausgebildet, auf Grundlage einer von der Bremsbetätigungseinheit 112 empfangenen ersten Betätigungsinformation, sowie auf Grundlage von von dem Fahrzeugbus 114 empfangenen Bremsanforderungen Steuersignale für die Bremsensteuereinheiten 118, 120, 122, 124 der Radbremsen 104, 106, 108, 110 zu erzeugen und über die erste Datenverbindung an die Bremsensteuereinheiten 118, 120, 122, 124 zu übermitteln. Die Bremsensteuereinheiten 118, 120, 122, 124 sind dann dazu ausgebildet, die Aktuatoren 126, 128, 130, 132 den empfangenen Steuersignalen entsprechend anzusteuern, sodass ein Bremsmoment auf die Räder 142, 144, 146, 148 bewirkt wird. Dabei werden durch die Raddrehzahlsensoren 134, 136, 138, 140 jeweils die Raddrehzahlen der Räder 142, 144, 146, 148 überwacht und entsprechende Raddrehzahlinformationen an die zentrale Bremsensteuereinheit 102 über die erste Datenverbindung 154 übermittelt. Die zentrale Bremsensteuereinheit 102 kann auf Grundlage der Raddrehzahlinformationen und gegebenenfalls unter Berücksichtigung weiterer Informationen Bremsenregelfunktionen, wie beispielsweise eine Anti-Blockier-Regelung umsetzen.

Wird aufgrund einer entsprechenden Betätigung von der Parkbremsbetätigungseinrichtung 116, die beispielsweise als Knopf oder Schalter, insbesondere als Kippschalter, ausgebildet sein kann, eine entsprechende Parkbremsinformation an die zentrale Bremsensteuereinheit 102 übermittelt, steuert die zentrale Bremsensteuereinheit 102 die Radbremsen 104, 106, 108, 110 bzw. deren Bremsensteuereinheit 118, 120, 122, 124 so an, dass eine entsprechende Parkbremsfunktion durch die Radbremsen 104, 106, 108, 110 umgesetzt wird.

Die zweite Signalausgang 152 der Bremsbetätigungseinrichtung 112 ist über eine zweite Datenverbindung 156 direkt mit der lokalen Bremsensteuereinheit 118 der Radbremse 104 verbunden. So kann in einer Rückfallebenenbetriebsart des Bremssystems 100, beispielsweise im Falle eines Ausfalls der zentralen Bremsensteuereinheit 102, eine Betätigungsinformation von der Bremsbetätigungseinheit 112 an die lokale Bremsensteuereinheit 118 der Radbremse 104 direkt übermittelt werden. Die lokale Bremsensteuereinheit 118 ist dabei dazu ausgebildet, lokal aus der empfangenen Betätigungsinformation eine Bremsanforderung und mithin ein entsprechendes durch die Radbremse 104 aufzubringendes Bremsmoment zu bestimmen und den Aktuator 126 entsprechend anzusteuern.

Ferner ist die lokale Bremsensteuereinheit 118 dazu ausgebildet, die empfangene Betätigungsinformation über eine dritte Datenverbindung 158 an die weiteren lokalen Bremsensteuereinheiten 122, 124 und 120 weiterzugeben, sodass auch dort lokal eine Bremsanforderung bestimmt und die jeweiligen Aktuatoren 130, 128 und 132 entsprechend angesteuert werden können. Ferner sind die lokalen Bremsensteuereinheiten 118, 120, 122, 124 vorzugsweise dazu ausgebildet, basierend auf den jeweiligen Raddrehzahlinformationen der Raddrehzahlsensoren 134, 136, 138, 140 eine Bremsenregelfunktion, wie beispielsweise eine Anti-Blockier-Regelung durchzuführen. Hierzu kann insbesondere auch vorgesehen sein, dass die Raddrehzahlinformationen der jeweiligen Raddrehzahlsensoren 134, 136, 138, 140 zwischen den lokalen Bremsensteuereinheiten 118, 120, 122, 124 ausgetauscht werden.

Schließlich ist die lokale Bremsensteuereinheit 120 auch mit dem Fahrzeugbus 114 verbunden, sodass von dem Fahrzeugbus 114 empfangene Bremsanforderungen von der lokalen Bremsensteuereinheit 120 bei der Ansteuerung des Aktuators 128 zur Bereitstellung eines Bremsmoments berücksichtigt wird. Ferner wird auch eine von dem Fahrzeugbus 114 empfangene Bremsanforderung über die dritte Datenverbindung zwischen den lokalen Bremsensteuereinheiten 118, 120, 122, 124 ausgetauscht und lokal bei der Steuerung der Radbremsen 104, 106, 108, 110 berücksichtigt.

Die dritten Datenverbindung 156 bildet dabei eine Ringverbindung aus, in der die lokalen Bremsensteuereinheiten 118, 120, 122, 124 seriell hinter einander geschaltet sind, sodass stets eine lokale Bremsensteuereinheit maximal mit zwei weiteren Bremsensteuereinheiten über die dritte Datenverbindung 156 verbunden ist.

In der Rückfallebenenbetriebsart des Bremssystems 100 und mithin bei einem Ausfall der zentralen Bremsensteuereinheit 102 wird aufgrund der ausschließlichen Verbindung der Parkbremsbetätigungseinrichtung 116 mit der zentralen Bremsensteuereinheit 102 eine von der Parkbremsbetätigungseinrichtung 116 bereitgestellte Parkbremsinformation nicht mehr an die lokalen Bremsensteuereinheiten 118, 120, 122, 124 weitergegeben. Es kann jedoch durch die Radbremsen 104, 106, 108, 110 auch weiterhin eine Parkbremsfunktion implementiert werden, indem auf anderweitige Fahrzeuginformationen zurückgegriffen wird. Beispielsweise kann vorgesehen sein, dass eine Parkbremsfunktion der Radbremsen 104, 106, 108, 110 automatisch aktiviert wird, wenn die Zündung des Fahrzeugs abgeschaltet wird, oder der Fahrer das Fahrzeug verlässt. Eine derartige Information kann beispielsweise über den Fahrzeugbus 114 an die lokalen Bremsensteuereinheiten 118, 120, 122, 124 übermittelt werden, sodass automatisch in diesen Fällen auch bei Abwesenheit einer separaten Parkbremsanforderung durch die zentrale Bremsensteuereinheit 102 die jeweiligen Parkbremsfunktionen aktiviert werden.

Das Bremssystem weist vorzugsweise zwei unabhängige Energieversorgungen (nicht dargestellt) auf. Dabei ist bevorzugt eine primäre Energieversorgung dazu ausgebildet, eine erste Sensoranordnung der Bremsbetätigungseinheit 112, die zentrale Bremsensteuereinheit 102, und die Radbremsen 104 und 106, also die Radbremsen einer Vorderachse des Fahrzeugs mit Energie zu versorgen. Eine sekundäre Energieversorgung ist demnach dazu ausgebildet, eine zweite Sensoranordnung der Bremsbetätigungseinheit 112, die Radbremsen 108 und 110, also die Radbremsen einer Hinterachse des Fahrzeugs mit Energie zu versorgen. Dabei können alternativ auch die Radbremsen 108 und 110 der Hinterachse zusammen mit der zentralen Bremsensteuereinheit 102 von der primären Energieversorgung mit Energie versorgt werden, während die Radbremsen 104 und 106 der Vorderachse von der sekundären Energieversorgung mit Energie versorgt werden.

Alternativ kann auch vorgesehen sein, dass die primäre Energieversorgung eine erste Sensoranordnung der Bremsbetätigungseinheit 112, die zentrale Bremsensteuereinheit 102, die Radbremse 104 und die Radbremse 110, also diagonal angeordnete Radbremsen, mit Energie versorgt, während die sekundäre Energieversorgung eine zweite Sensoranordnung der Bremsbetätigungseinheit 112 und die Radbremsen 106 und 108 mit Energie versorgt. Ferner kann auch die primäre Energieversorgung die Radbremsen 106 und 108 zusammen mit der zentralen Bremsensteuereinheit 102 mit Energie versorgen, während die sekundäre Energieversorgung die Radbremsen 104 und 110 mit Energie versorgt.

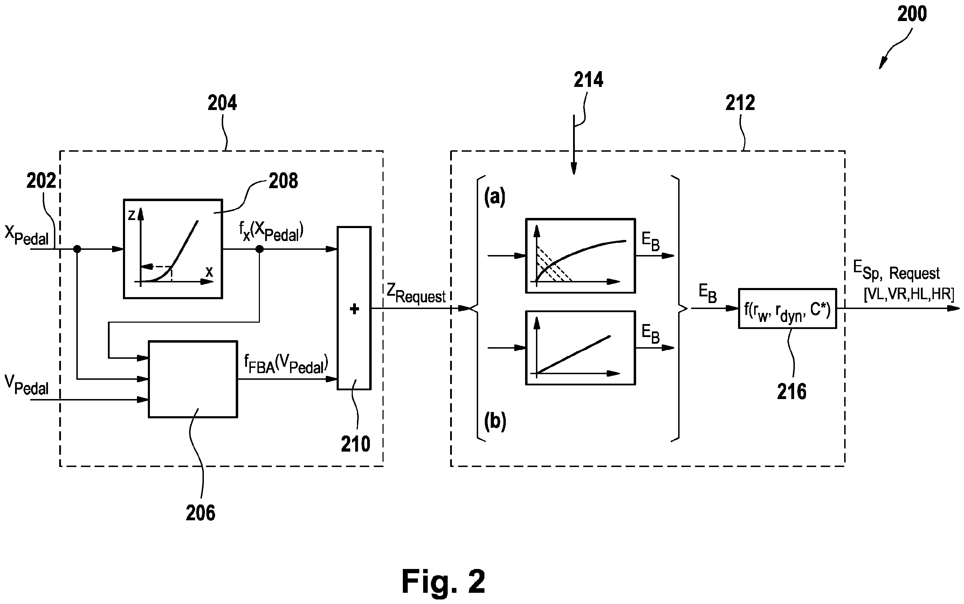

Die Figur 2 zeigt eine beispielhafte Regleranordnung 200 zur Bestimmung von Steuersignalen aus einer ersten Betätigungsinformation durch die zentrale Bremsensteuereinheit 102 in einer Normalbetriebsart des zuvor beschriebenen Bremssystems 100. Dabei wird zunächst eine erste Betätigungsinformation 202, im dargestellten Fall in Form eines Betätigungswegs x_{Pedal} des Bremspedals der Bremsbetätigungseinheit 112 erfasst und einer Fahrerwunscherfassung 204 zugeführt. Neben dem Betätigungsweg x_{Pedal} wird in der dargestellten Ausführung ferner eine Geschwindigkeit der Pedalbetätigung v_{Pedal} zur Fahrerwunscherfassung 204 berücksichtigt, die einen Aufschluss darüber geben kann, ob es sich bei der Bremsanforderung beispielsweise um eine Gefahrenbremsung handelt.

Die Geschwindigkeit der Pedalbetätigung v_{Pedal} wird dabei einem dynamischen Anteil 206 der Fahrerwunscherfassung 204 zugeführt, während der Betätigungsweg x_{Pedal} sowohl dem dynamischen Anteil 206 als auch einer direkten Auswertung des Betätigungswegs 208 zugeführt wird. Die direkte Auswertung des Betätigungswegs 208 ordnet dabei einem eingehenden Betätigungsweg x_{Pedal} einen Funktionswert fₓ(x_{Pedal}) zu, der wiederum dem dynamischen Anteil 206 zugeführt wird.

Der aus dem dynamischen Anteil 206 resultierende Wert f_{FBA}(v_{Pedal}) und der aus der direkten Auswertung des Betätigungswegs 208 resultierende Wert fₓ(x_{Pedal}) werden anschließend in Funktionsblock 210 zu einer Bremsanforderung in Form eines Fahrzeugverzögerungswunsches Z_{Request} verarbeitet, der anschließend der Bestimmung einer Bremskraftverteilung 212 zugeführt wird. Der Fahrzeugverzögerungswunsches Z_{Request} beschreibt dabei eine durch die Radbremsen 104, 106, 108 und 110 zu bewirkende Sollverzögerung des Fahrzeugs.

Bei der Bestimmung der Bremskraftverteilung 212 werden dabei zwei Ansätze unterschieden, die in der Figur 2 mit a) und b) unterschieden werden. Bei dem ersten Fall a) wird der Bremskraftverteilung aus dem ermittelten Fahrzeugverzögerungswunsch Z_{Request} eine ideale Bremskraftverteilung zugrunde gelegt. Zur Bestimmung der idealen Bremskraftverteilung werden dabei weitere Fahrzeugdaten 214 berücksichtigt, wie beispielsweise das Gewicht des Fahrzeugs, der Radstand, die Schwerpunktlage des Fahrzeugs oder ähnliches. Dabei kann auch vorgesehen sein, dass die Verteilung der aufzubringen Bremskraft zwischen Vorderachse und Hinterachse des Fahrzeugs in Abhängigkeit der Stärke des Fahrzeugverzögerungswunsches Z_{Request} ermittelt wird. Dabei kann vorgesehen sein, dass mit zunehmender Stärke des Fahrzeugverzögerungswunsches Z_{Request} ein zunehmender Anteil der Fahrzeugverzögerung durch die Radbremsen 104 und 106 der Vorderachse des Fahrzeugs umgesetzt wird. So kann die Verzögerungsfähigkeit der Radbremsen unter Berücksichtigung der dynamischen Radlastverteilung optimal ausgenutzt werden. In dem zweiten Fall b) wird hingegen eine fest vorgegebene Bremskraftverteilung zwischen der Vorderachse und der Hinterachse des Fahrzeugs zugrunde gelegt

Aus den so ermittelten Werten der zur Umsetzung des Fahrzeugverzögerungswunsches Z_{Request} erforderlichen Bremskräfte gemäß F_{B} der Bremskraftverteilung werden anschließend in Funktionsblock 216 die durch die Radbremsen 104, 106, 108 und 110 aufzubringenden Spannkräfte F_{Sp,Request} [VL,VR,HL,HR] ermittelt und als Steuerinformationen an die lokalen Bremsensteuereinheiten 118, 120, 122 und 124 der Radbremsen 104, 106, 108 und 110 übermittelt. Alternativ kann hier und bei den weiteren Betrachtungen anstelle eines Sollwertes für die Spannkraft auch ein Sollwert für das Bremsmoment an den Rädern vorgeben werden. Dies ist auch abhängig davon, welche physikalische Größe durch die elektromechanischen Radbremsen 104, 106, 108, 110 eingestellt werden soll bzw. kann.

Alternativ kann ferner auch in der Normalbetriebsart bereits vorgesehen sein, dass die Bestimmung der Bremskraftverteilung 212 auf den lokalen Bremsensteuereinheiten 118, 120, 122 und 124 erfolgt, sodass die zentrale Steuereinheit 102 lediglich den Fahrzeugverzögerungswunsch Z_{Request} ermittelt und als Steuerinformation über die erste Datenverbindung 154 an die lokalen Bremsensteuereinheiten 118, 120, 122 und 124 überträgt.

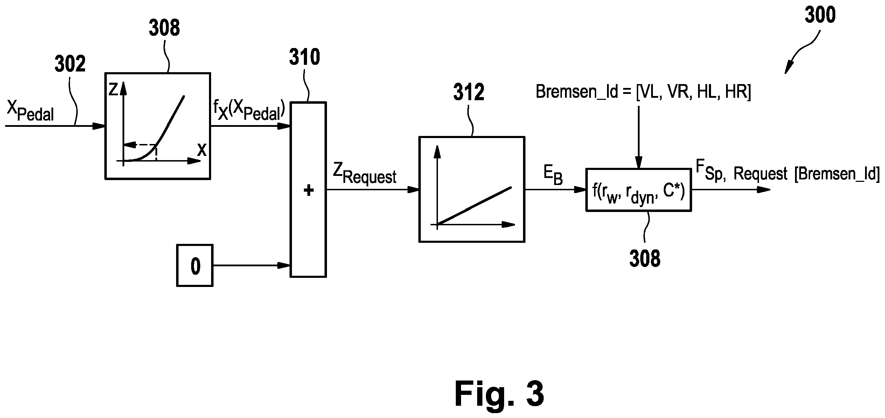

Die Figur 3 zeigt eine beispielhafte Regleranordnung 300 zur Bestimmung von Spannkräften aus einer zweiten Betätigungsinformation durch die lokalen Bremsensteuereinheiten 118, 120, 122 und 124 in einer Rückfallebenenbetriebsart. Dabei ist vorgesehen, dass die lokalen Bremsensteuereinheiten 118, 120, 122 und 124 direkt über die zweite Datenverbindung 156 und die dritte Datenverbindung 158 die zweite Betätigungsinformation 302 in Form eines Betätigungswegs x_{Pedal} des Bremspedals der Bremsbetätigungseinheit 112 erhalten. Anstelle eines Betätigungswegs x_{Pedal} kann dabei insbesondere auch ein Betätigungswinkel oder eine Betätigungskraft als zweite Betätigungsinformation 302 vorgesehen sein, die physikalisch unabhängig von dem Betätigungsweg x_{Pedal} ermittelt wird.

Die zweite Betätigungsinformation wird dabei wiederum der direkten Auswertung des Betätigungswegs 308 zugeführt, aus der ein von dem Betätigungsweg x_{Pedal}, oder einer hierzu alternativen Größe, abhängiger Wert fₓ(x_{Pedal}) ermittelt wird. Der zuvor mit Bezug auf Figur 2 beschriebene dynamische Anteil 206 wird dabei in der hier dargestellten Ausgestaltung deaktiviert. Aus dem Wert fₓ(x_{Pedal}) wird wiederum in Funktionsblock 310 der Fahrzeugverzögerungswunsch Z_{Request} ermittelt und einer Bestimmung der aufzubringenden Bremskraft F_{B} in Block 312 zugeführt. Dabei wird eine fest vorgegebene, nicht von der Stärke des Fahrzeugverzögerungswunsches Z_{Request} abhängige, Bremskraftverteilung zwischen Vorderachse und Hinterachse zugrunde gelegt. Abschließend wird durch die lokalen Bremsensteuereinheiten 118, 120, 122 und 124 jeweils in Block 314 ein Sollwert für die aufzubringende Spannkraft F_{Sp,Request} [Bremsen_id] der jeweiligen Radbremse 104, 106, 108 oder 110 ermittelt, wobei die Bremsen_id die Position der jeweiligen Radbremse 104, 106, 108 oder 110 in dem Fahrzeug (VL, VR, HL, HR) kennzeichnet. Diese Information wird dann zur Ansteuerung der jeweiligen Aktuatoren 126, 128, 130, und 132 verwendet.

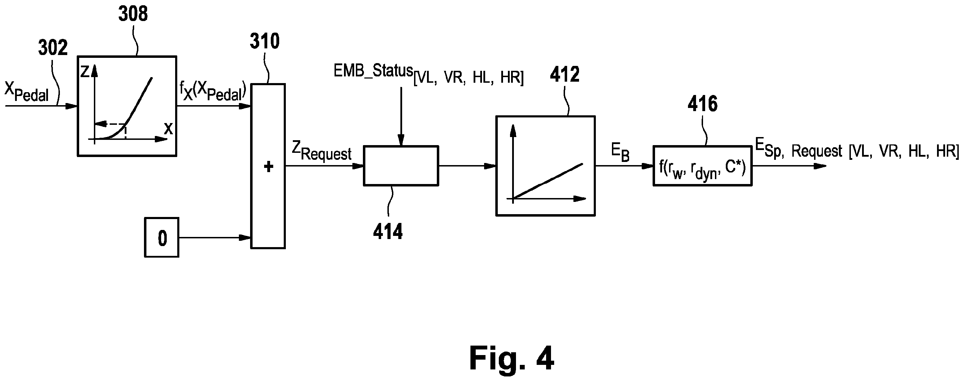

Die Figur 4 zeigt schließlich eine beispielhafte Regleranordnung 400 zur Bestimmung von Steuersignalen oder Spannkräften aus einer Betätigungsinformation bei Ausfall einer lokalen Bremsensteuereinheit 118, 120, 122 oder 124. Dabei unterscheidet sich die Anordnung der Figur 4 bis einschließlich der Bestimmung des Fahrzeugverzögerungswunsches Z_{Request} nicht von der Anordnung der Figur 3, sodass die entsprechende Beschreibung auf die Anordnung der Figur 4 übertragbar ist.

Allerdings wird in der Anordnung der Figur 4 der Fahrzeugverzögerungswunsch Z_{Request} nicht direkt einer Bestimmung der aufzubringenden Bremskraft 412 zugeführt. Vielmehr wird der ermittelte Fahrzeugverzögerungswunsch Z_{Request} einer Anstiegsbegrenzungsfunktion 414 zugeführt, wobei die Anstiegsbegrenzungsfunktion 414 als zusätzliche Information den Status EMB_Status [VL, VR, HL, HR] der lokalen Bremsensteuereinheiten 118, 120, 122 und 124 berücksichtigt. Die Anstiegsbegrenzungsfunktion 414 realisiert dabei die Begrenzung des Anstiegs des Fahrzeugverzögerungswunsches Z_{Request} und mithin der aufzubringenden Bremsmomente auf einen bestimmten Gradienten. Bei Ausfall einer lokalen Bremsensteuereinheit 118, 120, 122 oder 124 soll dabei für die verbleibenden, noch funktionsfähigen Radbremsen der Verzögerungswunsch so gebildet werden, dass das Fahrzeug bei der Bremsenbetätigung beherrschbar bleibt. Insbesondere bei Ausfall einer Vorderradbremse darf der Kraftaufbau an der verbleibenden, intakten Radbremse nicht zu schnell erfolgen, damit die auftretenden Giermomente durch entsprechende Reaktionen vom Fahrer beherrscht werden können.

Die Größe der Gradientenlimitierung ist dabei abhängig vom Funktionsstatus aller lokalen Bremsensteuereinheiten 118, 120, 122 und 124, bzw. von der Information, welche lokalen Bremsensteuereinheiten 118, 120, 122 und 124 den Status AKTIV haben. Der Status AKTIV bedeutet in diesem Fall, dass die betreffende Radbremse 104, 106, 108 und 110 fehlerfrei arbeitet und funktionsbereit ist. Dabei wird die Anstiegsbegrenzung in Block 414 bei Ausfall (Funktionsstatus FEHLER) einer Radbremse 104 oder 106 der Vorderachse des Fahrzeugs deutlich stärker ausgeführt werden als dies beim Ausfall einer Radbremse 108 oder 110 der Hinterachse des Fahrzeugs der Fall sein wird. Sind alle Radbremsen 104, 106, 108, 110 verfügbar, ist die Anstiegsbegrenzungsfunktion 414 hingegen deaktiviert. Abschließend wird auch in der Anordnung 400 der Figur 4 aus der in Block 412 bestimmten, anstiegsbegrenzten Bremskraft F_{B} in Funktionsblock 416 eine von den Radbremsen 104, 106 108 und 110 aufzubringende Spannkraft F_{SP, Request} [VL, VR, HL, HR] ermittelt.

Die in Figur 4 gezeigte Regleranordnung kann dabei sowohl durch die zentrale Bremsensteuereinheit 102 als auch nach einer bevorzugten Ausführungsform in der Rückfallebenenbetriebsart durch die lokalen Bremsensteuereinheiten 118, 120, 122 und 124 implementiert werden. Dabei wird bei einer Implementierung der Regleranordnung in der zentralen Steuereinheit 102 für jede funktionsfähige Radbremse 104, 106, 108 und 110 die jeweils aufzubringende Spannkraft F_{SP, Request} [VL, VR, HL, HR] ermittelt und als Steuerinformation über die erste Datenverbindung 154 an die jeweilige lokale Bremsensteuereinheit 118, 120, 122 und 124 übermittelt.

Bei Implementierung in einer lokalen Bremsensteuereinheit 118, 120, 122 oder 124 wird hingegen nur die aufzubringende Spannkraft F_{SP, Request} [VL, VR, HL, HR] für die jeweilige Radbremse 104, 106, 108 oder 110 ermittelt und zur Steuerung des entsprechenden Aktuators 126, 128, 130, 132 verwendet.

Ferner ist es auch bei Ausfall einer die lokalen Bremsensteuereinheiten 118, 120, 122 oder 124 möglich, dass die zentrale Bremsensteuereinheit 102 lediglich den Fahrzeugverzögerungswunsch Z_{Request} ermittelt und an die verbleibenden lokalen Bremsensteuereinheiten 118, 120, 122 und 124 übermittelt. Die lokalen Bremsensteuereinheiten 118, 120, 122 und 124 sind dann dazu ausgebildet, die jeweils aufzubringende Spannkraft F_{SP, Request} [VL, VR, HL, HR] für die zugeordnete Radbremse 104, 106, 108 und 110 aus dem Fahrzeugverzögerungswunsch Z_{Request} in der zuvor beschriebenen Art und Weise zu ermitteln.

## Patentansprüche

1. Bremssystem (100) für ein Kraftfahrzeug mit elektromechanischen Radbremsen (104, 106, 108, 110), einer Bremsbetätigungseinheit (112) und einer zentralen Bremsensteuereinheit (102),
wobei die Radbremsen (104, 106, 108, 110) jeweils eine lokale Bremsensteuereinheit (118, 120, 122, 124) aufweisen,
wobei die zentrale Bremsensteuereinheit (102) mit der Bremsbetätigungseinheit (112) und den lokalen Bremsensteuereinheiten (118, 120, 122, 124) der Radbremsen (104, 106, 108, 110) über eine erste Datenverbindung (154) direkt verbunden ist,
wobei die Bremsbetätigungseinheit (112) mit der lokalen Bremsensteuereinheit (118, 120, 122, 124) wenigstens einer Radbremse (104, 106, 108, 110) über eine zweite Datenverbindung (156) direkt verbunden ist,
wobei die zentrale Bremsensteuereinheit (102) in einer Normalbetriebsart des Bremssystems (100) dazu ausgebildet ist, aus einer insbesondere über die erste Datenverbindung (154) erhaltenen ersten Betätigungsinformation der Bremsbetätigungseinheit (112) wenigstens eine Bremsanforderung zu ermitteln und der Bremsanforderung entsprechende Steuersignale an die lokalen Bremsensteuereinheiten (118, 120, 122, 124) der Radbremsen (104, 106, 108, 110) zu übermitteln, und
wobei die lokalen Bremsensteuereinheiten (118, 120, 122, 124) der Radbremsen (104, 106, 108, 110) in einer Rückfallebenenbetriebsart des Bremssystems (100) dazu ausgebildet sind, die jeweiligen Radbremsen (104, 106, 108, 110) auf Grundlage einer über die zweite Datenverbindung (156) erhaltenen zweiten Betätigungsinformation der Bremsbetätigungseinheit (112) anzusteuern, **dadurch gekennzeichnet, dass** die Bremsbetätigungseinheit (112) mit der lokalen Bremsensteuereinheit (118, 120, 122, 124) genau einer Radbremse (104, 106, 108, 110) direkt verbunden ist, wobei die mit der Bremsbetätigungseinheit (112) direkt verbundene lokale Bremsensteuereinheit (118, 120, 122, 124) dazu ausgebildet ist, eine von der Bremsbetätigungseinheit (112) empfangene zweite Betätigungsinformation über eine dritte Datenverbindung (158) an die lokalen Bremsensteuereinheiten (118, 120, 122, 124) der weiteren Radbremsen (104, 106, 108, 110) zu übermitteln .

2. Bremssystem (100) nach Anspruch 1, **dadurch gekennzeichnet, dass** die lokalen Bremsensteuereinheiten (118, 120, 122, 124) der Radbremsen (104, 106, 108, 110) dazu ausgebildet sind, über die dritte Datenverbindung (158) die zweite Betätigungsinformation und/oder ermittelte Raddrehzahlinformationen untereinander auszutauschen.

3. Bremssystem (100) nach einem der vorherigen Ansprüche, **dadurch gekennzeichnet, dass** die lokalen Bremsensteuereinheiten (118, 120, 122, 124) der Radbremsen (104, 106, 108, 110) jeweils mit Raddrehzahlsensoren (134, 136, 138, 140) der den Radbremsen (104, 106, 108, 110) zugeordneten Rädern (142, 144, 146, 148) verbunden sind.

4. Bremssystem (100) nach einem der vorherigen Ansprüche, **dadurch gekennzeichnet, dass** die erste Betätigungsinformation unabhängig von der zweiten Betätigungsinformation ermittelt wird.

5. Bremssystem (100) nach einem der vorherigen Ansprüche, **dadurch gekennzeichnet, dass** die Bremsbetätigungseinheit (112) wenigstens zwei Signalausgänge (150, 152) aufweist, wobei ein erster Signalausgang (150) mit der ersten Datenverbindung (154) und ein zweiter Signalausgang (152) mit der zweiten Datenverbindung (156) verbunden ist.

6. Bremssystem (100) nach einem der vorherigen Ansprüche, **dadurch gekennzeichnet, dass** die zentrale Bremsensteuereinheit (102) mit einem Fahrzeugbus (114) verbunden ist, wobei von dem Fahrzeugbus (114) empfangene Bremsanforderungen von der zentralen Bremsensteuereinheit (102) bei der Ermittlung der Steuersignale für die lokalen Bremsensteuereinheiten (118, 120, 122, 124) berücksichtigt werden.

7. Bremssystem (100) nach einem der vorherigen Ansprüche, **dadurch gekennzeichnet, dass** wenigstens eine lokale Bremsensteuereinheit (118, 120, 122, 124) direkt mit dem Fahrzeugbus (114) verbunden ist.

8. Bremssystem (100) nach einem der vorherigen Ansprüche, **dadurch gekennzeichnet, dass** das Bremssystem (100) eine primäre Energieversorgung und eine von der primären Energieversorgung unabhängige sekundäre Energieversorgung aufweist.

9. Bremssystem (100) nach einem der vorherigen Ansprüche, **dadurch gekennzeichnet, dass** wenigstens eine Teilmenge der Radbremsen (104, 106, 108, 110) dazu ausgebildet ist, eine Parkbremsfunktion umzusetzen, wobei in der Rückfallebenenbetriebsart die lokalen Bremsensteuereinheiten (118, 120, 122, 124) dazu ausgebildet sind, eine Parkbremsfunktion zu aktivieren, wenn erkannt wurde, dass ein Fahrer das Kraftfahrzeug verlässt, eine Zündung des Kraftfahrzeugs deaktiviert und/oder eine zweite Parkbremsbetätigungseinrichtung aktiviert wurde.

10. Bremssystem (100) nach einem der vorherigen Ansprüche, **dadurch gekennzeichnet, dass** die zentrale Bremsensteuereinheit (102) in der Normalbetriebsart aus der ermittelten Bremsanforderung jeweils durch die Radbremsen (104, 106, 108, 110) aufzubringende Bremsmomente und/oder Spannkräfte ermittelt, wobei die an die lokalen Bremsensteuereinheiten (118, 120, 122, 124) übermittelten Steuersignale die ermittelten Bremsmomente und/oder Spannkräfte für die jeweils der lokalen Bremsensteuereinheit (118, 120, 122, 124) zugeordnete Radbremse (104, 106, 108, 110) enthalten.

11. Bremssystem (100) nach einem der vorherigen Ansprüche 1 bis 9, **dadurch gekennzeichnet, dass** die zentrale Bremsensteuereinheit (102) in der Normalbetriebsart aus der ermittelten Bremsanforderung eine durch die Radbremsen (104, 106, 108, 110) aufzubringende Sollverzögerung des Kraftfahrzeugs ermittelt, wobei die an die lokalen Bremsensteuereinheiten (118, 120, 122, 124) übermittelten Steuersignale die ermittelte Sollverzögerung des Kraftfahrzeugs enthalten und wobei die lokalen Bremsensteuereinheiten (118, 120, 122, 124) dazu ausgebildet sind, ein durch die jeweils zugeordnete Radbremse (104, 106, 108, 110) aufzubringendes Bremsmoment und/oder eine Spannkraft zur Umsetzung der Sollverzögerung des Kraftfahrzeugs zu ermitteln.

12. Bremssystem (100) nach einem der vorherigen Ansprüche, **dadurch gekennzeichnet, dass** die lokalen Bremsensteuereinheiten (118, 120, 122, 124) in der Rückfallebenenbetriebsart dazu ausgebildet sind, aus der zweiten Betätigungsinformation ein durch die der jeweiligen lokalen Bremsensteuereinheit (118, 120, 122, 124) zugeordnete Radbremse (104, 106, 108, 110) aufzubringendes Bremsmoment und/oder eine aufzubringende Spannkraft zu ermitteln.

13. Bremssystem (100) nach Anspruch 11 oder 12, **dadurch gekennzeichnet, dass** bei der Ermittlung des aufzubringenden Bremsmoments und/oder der aufzubringenden Spannkraft eine vordefinierte Verteilung einer zur Umsetzung einer Bremsanforderung benötigten Bremskraft zwischen den Radbremsen (104, 106, 108, 110) berücksichtigt wird.

14. Bremssystem (100) nach einem der Ansprüche 10 bis 13, **dadurch gekennzeichnet, dass** bei einem erkannten Ausfall wenigstens einer der lokalen Bremsensteuereinheiten (118, 120, 122, 124) ein Anstieg der Sollverzögerung des Kraftfahrzeugs und/oder ein Anstieg der durch die Radbremsen (104, 106, 108, 110) aufgebrachten Bremsmomente und/oder Spannkräfte auf einen bestimmten Gradienten begrenzt wird.

15. Bremssystem (100) nach Anspruch 14, **dadurch gekennzeichnet, dass** der Gradient von der Position der der ausgefallenen lokalen Bremsensteuereinheit (118, 120, 122, 124) zugeordneten Radbremse (104, 106, 108, 110) an dem Kraftfahrzeug abhängig ist.

## Claims

1. Brake system (100) for a motor vehicle having electromechanical wheel brakes (104, 106, 108, 110), a brake operating unit (112) and a central brake control unit (102),
wherein the wheel brakes (104, 106, 108, 110) each have a local brake control unit (118, 120, 122, 124),
wherein the central brake control unit (102) is connected directly to the brake operating unit (112) and to the local brake control units (118, 120, 122, 124) of the wheel brakes (104, 106, 108, 110) via a first data connection (154),
wherein the brake operating unit (112) is connected directly to the local brake control unit (118, 120, 122, 124) of at least one wheel brake (104, 106, 108, 110) via a second data connection (156),
wherein the central brake control unit (102) in a normal operating mode of the brake system (100) is configured to determine at least one brake demand from first operating information, received in particular via the first data connection (154), of the brake operating unit (112) and to transmit control signals corresponding to the brake demand to the local brake control units (118, 120, 122, 124) of the wheel brakes (104, 106, 108, 110), and
wherein the local brake control units (118, 120, 122, 124) of the wheel brakes (104, 106, 108, 110) in a fallback level operating mode of the brake system (100) are configured to actuate the respective wheel brakes (104, 106, 108, 110) on the basis of second operating information, received via the second data connection (156), of the brake operating unit (112), **characterized in that** the brake operating unit (112) is connected directly to the local brake control unit (118, 120, 122, 124) of exactly one wheel brake (104, 106, 108, 110), wherein the local brake control unit (118, 120, 122, 124) connected directly to the brake operating unit (112) is configured to transmit second operating information received from the brake operating unit (112) to the local brake control units (118, 120, 122, 124) of the further wheel brakes (104, 106, 108, 110) via a third data connection (158).

2. Brake system (100) according to Claim 1, **characterized in that** the local brake control units (118, 120, 122, 124) of the wheel brakes (104, 106, 108, 110) are configured to exchange the second operating information and/or determined wheel speed information with each other via the third data connection (158).

3. Brake system (100) according to either of the preceding claims, **characterized in that** the local brake control units (118, 120, 122, 124) of the wheel brakes (104, 106, 108, 110) are each connected to wheel speed sensors (134, 136, 138, 140) of the wheels (142, 144, 146, 148) associated with the wheel brakes (104, 106, 108, 110).

4. Brake system (100) according to one of the preceding claims, **characterized in that** the first operating information is determined independently of the second operating information.

5. Brake system (100) according to one of the preceding claims, **characterized in that** the brake operating unit (112) has at least two signal outputs (150, 152), wherein a first signal output (150) is connected to the first data connection (154) and a second signal output (152) is connected to the second data connection (156).

6. Brake system (100) according to one of the preceding claims, **characterized in that** the central brake control unit (102) is connected to a vehicle bus (114), wherein brake demands received from the vehicle bus (114) are taken into account by the central brake control unit (102) in the determination of the control signals for the local brake control units (118, 120, 122, 124).

7. Brake system (100) according to one of the preceding claims, **characterized in that** at least one local brake control unit (118, 120, 122, 124) is connected directly to the vehicle bus (114).

8. Brake system (100) according to one of the preceding claims, **characterized in that** the brake system (100) has a primary power supply and a secondary power supply which is independent of the primary power supply.

9. Brake system (100) according to one of the preceding claims, **characterized in that** at least one subset of the wheel brakes (104, 106, 108, 110) is configured to implement a parking brake function, wherein in the fallback level operating mode the local brake control units (118, 120, 122, 124) are configured to activate a parking brake function when it has been detected that a driver is leaving the motor vehicle, an ignition of the motor vehicle has been deactivated and/or a second parking brake operating device has been activated.

10. Brake system (100) according to one of the preceding claims, **characterized in that** the central brake control unit (102) in the normal operating mode determines from the determined brake demand braking torques and/or clamping forces to be applied by each of the wheel brakes (104, 106, 108, 110), wherein the control signals transmitted to the local brake control units (118, 120, 122, 124) contain the determined braking torques and/or clamping forces for the wheel brake (104, 106, 108, 110) associated with each local brake control unit (118, 120, 122, 124).

11. Brake system (100) according to one of the preceding Claims 1 to 9, **characterized in that** the central brake control unit (102) in the normal operating mode determines from the determined brake demand a desired deceleration of the motor vehicle that is to be applied by the wheel brakes (104, 106, 108, 110), wherein the control signals transmitted to the local brake control units (118, 120, 122, 124) contain the determined desired deceleration of the motor vehicle and wherein the local brake control units (118, 120, 122, 124) are configured to determine a braking torque to be applied by the respective associated wheel brake (104, 106, 108, 110) and/or a clamping force for implementing the desired deceleration of the motor vehicle.

12. Brake system (100) according to one of the preceding claims, **characterized in that** the local brake control units (118, 120, 122, 124) in the fallback level operating mode are configured to determine from the second operating information a braking torque to be applied by the wheel brake (104, 106, 108, 110) associated with the respective local brake control unit (118, 120, 122, 124) and/or a clamping force to be applied.

13. Brake system (100) according to Claim 11 or 12, **characterized in that** a predefined distribution of a braking force necessary for implementing a brake demand between the wheel brakes (104, 106, 108, 110) is taken into account in the determination of the braking torque to be applied and/or of the clamping force to be applied.

14. Brake system (100) according to one of Claims 10 to 13, **characterized in that**, when the failure of at least one of the local brake control units (118, 120, 122, 124) is detected, an increase in the desired deceleration of the motor vehicle and/or an increase in the braking torques and/or clamping forces applied by the wheel brakes (104, 106, 108, 110) is limited to a specific gradient.

15. Brake system (100) according to Claim 14, **characterized in that** the gradient is dependent on the position in the motor vehicle of the wheel brake (104, 106, 108, 110) associated with the failed local brake control unit (118, 120, 122, 124).

## Revendications

1. Système de freins (100) destiné à un véhicule automobile équipé de freins électromécaniques de roues (104, 106, 108, 110), d'une unité d'actionnement de freins (112) et d'une unité centrale de commande de freins (102),
les freins de roues (104, 106, 108, 110) comprenant chacun une unité locale de commande de freins (118, 120, 122, 124),
l'unité centrale de commande de freins (102) étant reliée directement à l'unité d'actionnement de freins (112) et aux unités locales de commande de freins (118, 120, 122, 124) des freins de roues (104, 106, 108, 110) par l'intermédiaire d'une première liaison de données (154),
l'unité d'actionnement de freins (112) étant reliée directement à l'unité locale de commande de freins (118, 120, 122, 124) d'au moins un frein de roue (104, 106, 108, 110) par l'intermédiaire d'une deuxième liaison de données (156),
l'unité centrale de commande de freins (102) étant conçue, dans un mode de fonctionnement normal du système de freins (100), pour déterminer au moins une demande de freinage à partir d'une première information d'actionnement de l'unité d'actionnement de freins (112), obtenue en particulier par l'intermédiaire de la première liaison de données (154), et pour transmettre des signaux de commande correspondant à la demande de freinage aux unités locales de commande de freins (118, 120, 122, 124) des freins de roues (104, 106, 108, 110), et
les unités locales de commande de freins (118, 120, 122, 124) des freins de roues (104, 106, 108, 110) étant conçues, dans un mode de fonctionnement de niveau dégradé du système de freins (100), pour commander les freins de roues (104, 106, 108, 110) respectifs sur la base d'une deuxième information d'actionnement de l'unité d'actionnement de freins (112), obtenue par l'intermédiaire de la deuxième liaison de données (156), **caractérisé en ce que** l'unité d'actionnement de freins (112) est reliée directement à l'unité locale de commande de freins (118, 120, 122, 124) d'exactement un frein de roue (104, 106, 108, 110), l'unité locale d'actionnement de freins (118, 120, 122, 124) reliée directement à l'unité d'actionnement de freins (112) étant conçue pour transmettre une deuxième information d'actionnement destinée à être reçue par l'unité d'actionnement de freins (112) par l'intermédiaire d'une troisième liaison de données (158) aux unités locales d'actionnement de freins (118, 120, 122, 124) des autres freins de roues (104, 106, 108, 110).

2. Système de freins (100) selon la revendication 1, **caractérisé en ce que** les unités locales de commande de freins (118, 120, 122, 124) des freins de roues (104, 106, 108, 110) sont conçues pour échanger entre elles, par l'intermédiaire de la troisième liaison de données (158), la deuxième information d'actionnement et/ou des informations de vitesse de roues déterminées.

3. Système de freins (100) selon l'une des revendications précédentes, **caractérisé en ce que** les unités locales de commande de freins (118, 120, 122, 124) des freins de roues (104, 106, 108, 110) sont reliées respectivement à des capteurs de vitesse de roues (134, 136, 138, 140) des roues (142, 144, 146, 148) associées aux freins de roues (104, 106, 108, 110).

4. Système de freins (100) selon l'une des revendications précédentes, **caractérisé en ce que** la première information d'actionnement est déterminée indépendamment de la deuxième information d'actionnement.

5. Système de freins (100) selon l'une des revendications précédentes, **caractérisé en ce que** l'unité d'actionnement de freins (112) comprend au moins deux sorties de signal (150, 152), une première sortie de signal (150) étant reliée à la première liaison de données (154) et une deuxième sortie de signal (152) étant reliée à la deuxième liaison de données (156).

6. Système de freins (100) selon l'une des revendications précédentes, **caractérisé en ce que** l'unité centrale de commande de freins (102) est reliée à un bus de véhicule (114), les demandes de freinage reçues par le bus de véhicule (114) étant prises en compte par l'unité centrale de commande de freins (102) lors de la détermination des signaux de commande destinés aux unités locales de commande de freins (118, 120, 122, 124).

7. Système de freins (100) selon l'une des revendications précédentes, **caractérisé en ce qu'**au moins une unité locale de commande de freins (118, 120, 122, 124) est reliée directement au bus de véhicule (114).

8. Système de freins (100) selon l'une des revendications précédentes, **caractérisé en ce que** le système de freins (100) comprend une alimentation en énergie primaire et une alimentation en énergie secondaire indépendante de l'alimentation en énergie primaire.

9. Système de freins (100) selon l'une des revendications précédentes, **caractérisé en ce qu'**au moins un sous-ensemble des freins de roues (104, 106, 108, 110) est conçu pour mettre en oeuvre une fonction de frein de stationnement, les unités locales de commande de freins (118, 120, 122, 124) étant conçues, dans le mode de fonctionnement de niveau dégradé, pour activer une fonction de frein de stationnement lorsqu'il est détecté qu'un conducteur quitte le véhicule automobile, qu'un allumage du véhicule automobile est désactivé et/ou qu'un deuxième dispositif d'actionnement de frein de stationnement est activé.

10. Système de freins (100) selon l'une des revendications précédentes, **caractérisé en ce que** l'unité centrale de commande de freins (102), dans le mode de fonctionnement normal, détermine à partir de la demande de freinage déterminée, des couples de freinage et/ou des forces de serrage devant être appliqués respectivement par les freins de roues (104, 106, 108, 110), les signaux de commande transmis aux unités locales de commande de freins (118, 120, 122, 124) contenant des couples de freinage et/ou des forces de serrage déterminés pour le frein de roue (104, 106, 108, 110) respectivement associé à l'unité locale de commande de freins (118, 120, 122, 124).

11. Système de freins (100) selon l'une des revendications précédentes 1 à 9, **caractérisé en ce que** l'unité de commande centrale de freins (102), dans le mode de fonctionnement normal, détermine à partir de la demande de freinage déterminée, une décélération de consigne du véhicule automobile devant être appliquée par les freins de roues (104, 106, 108, 110), les signaux de commande transmis aux unités locales de commande de freins (118, 120, 122, 124) contenant la décélération de consigne déterminée du véhicule automobile et les unités locales de commande de freins (118, 120, 122, 124) étant conçues pour déterminer un couple de freinage devant être appliqué par le frein de roue (104, 106, 108, 110) respectivement associé et/ou une force de serrage pour mettre en oeuvre la décélération de consigne du véhicule automobile.

12. Système de freins (100) selon l'une des revendications précédentes, **caractérisé en ce que** les unités locales de commande de freins (118, 120, 122, 124) sont conçues, dans le mode de fonctionnement de niveau dégradé, pour déterminer, à partir de la deuxième information d'actionnement, un couple de freinage devant être appliqué par le frein de roue (104, 106, 108, 110) associé à l'unité locale de commande de freins (118, 120, 122, 124) respective et/ou une force de serrage devant être appliquée.

13. Système de freins (100) selon la revendication 11 ou 12, **caractérisé en ce que**, lors de la détermination du couple de freinage devant être appliqué et/ou de la force de serrage devant être appliquée, il est tenu compte d'une répartition prédéfinie d'une force de freinage nécessaire à la mise en oeuvre d'une demande de freinage entre les freins de roues (104, 106, 108, 110).

14. Système de freins (100) selon l'une des revendications 10 à 13, **caractérisé en ce que**, dans le cas d'une défaillance détectée d'au moins l'une des unités locales de commande de freins (118, 120, 122, 124), une augmentation de la décélération de consigne du véhicule automobile et/ou une augmentation des couples de freinage et/ou des forces de serrage appliqués par les freins de roues (104, 106, 108, 110) est limitée à un gradient déterminé.

15. Système de freins (100) selon la revendication 14, **caractérisé en ce que** le gradient est fonction de la position sur le véhicule automobile du frein de roue (104, 106, 108, 110) associé à l'unité locale de commande de freins (118, 120, 122, 124) défaillante.
